# EUROPEAN PATENT APPLICATION

(11) **EP 4 474 051 A1**
(43) Date of publication of application: **11.12.2024**
(21) Application number: 23386043.6
(22) Date of filing: 08.06.2023
(51) Int. Cl.: B01J 31/18

(54) **GOLD COMPLEX, METHOD OF PREPARATION AND USE**

(71) Applicant: Johnson Matthey Public Limited Company, London EC4A 4AB (GB)
(72) Inventor: The designation of the inventor has not yet been filed
(74) Representative: Johnson Matthey Plc

(57) **Abstract**

The specification describes complexes comprising gold and a nitrogen-containing ligand of Formula (II) or (III). The complexes may be supported on a support. Also described is a method of preparing supported complexes and a method of catalytic hydrochlorination using the complexes. The complexes are particularly suitable as catalysts for the conversion of acetylene to vinyl chloride monomer.

## Description

### Field of the Invention

The present invention relates to gold containing complexes, particularly for use as catalysts for the conversion of acetylene to vinyl chloride monomer (VCM).

### Background

The hydrochlorination of acetylene to produce VCM as the precursor to polyvinyl chloride (PVC) is currently a large scale industrial process, particularly in coal rich areas such as China and in areas rich in natural gas through natural gas to acetylene routes. Over 20 million tonnes of VCM are produced annually through acetylene hydrochlorination with the vast majority utilising mercuric chloride (HgCl₂) catalysts supported on activated carbon. The mercury catalyst poses significant environmental concerns due to volatile HgCl₂ subliming from the catalyst bed, up to 0.6 kg Hg/tonne VCM production. Due to the environmental impact of this process, the recently ratified Minamata convention dictates that all new VCM plants must use mercury free catalysts and in the near future all existing industrial plants must switch to mercury free alternatives. This has revived the commercial interest in using gold and other metals as a catalyst for this reaction.

It is known from WO2010/055341 (Johnson Matthey PLC and Aker Process B.V.) that Au-containing catalysts prepared by wet impregnation of a mixture of HAuCl₄ / aqua regia are active for the conversion of acetylene to VCM. The catalysts are believed to include gold particles having a metallic gold core and a shell of higher oxidation state species, including Au(I) and Au(III) which are believed to be the active species for the hydrochlorination reaction.

WO2013/008004 (Johnson Matthey PLC) describes a development of catalysts based on HAuCl₄ by including a sulphur-containing ligand such as thiosulphate. It is thought that the sulphur-containing ligand forms a complex with the Au atoms thereby stabilizing Au(I) and Au(III) which are the active species in the hydrochlorination reaction.

A further development of the above catalysts is described in WO2020/254817 (Johnson Matthey PLC), in which an inorganic oxide, hydroxide, oxo-salt or oxo-acid is included in order to improve the resistance of the catalyst towards carbon nanotube formation.

VCM catalysts comprising a complex of gold with a thiosulphate ligand on a carbon support have been commercialised by Johnson Matthey under the brand PRICAT^{™} MFC. While these catalysts have been a commercial success, the very high initial activity of these catalysts in the extremely exothermic acetylene hydrochlorination reaction needs to be carefully optimised for a specific system.

There is a need for alternative hydrochlorination catalysts.

### Summary of the invention

In co-pending application PCT/GB2022/053185 the present applicant describes hydrochlorination catalysts comprising a complex of gold and a ligand of Formula (I) 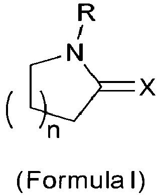 wherein
X is O or S;
n is 1 or 2;
R is H or a C1 to C10 hydrocarbon group optionally including one or more heteroatoms selected from halogen (F, Cl, Br, I), oxygen or nitrogen; and
the complex is supported on a support.

These catalysts have been found to have stable activity profiles and are less prone to initial overheating compared to known catalysts which contain a complex of gold with a sulphur-containing ligand on a support. The applicant has now found alternative catalysts which are also suitable as hydrochlorination catalysts.

In a first aspect the invention relates to a complex comprising gold and a ligand of Formula (II) 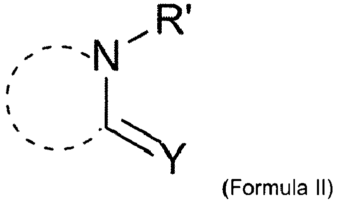 wherein:
R' is H or a C1-C4 hydrocarbyl group;
Y is O, S or NR" where R" is H or a C1-C4 hydrocarbyl group;
the dashed line together with the nitrogen and carbon atoms to which it is attached together form a substituted or unsubstituted ring moiety formed by m atoms where m is 4 to 8;
on the proviso that ligands of Formula (I) are excluded: 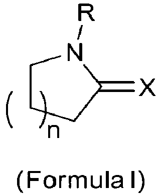 wherein
X is O or S;
n is 1 or 2; and
R is H or a C1-C4 hydrocarbyl group.

In a second aspect the invention relates to a complex comprising and a ligand of Formula (III) comprising a complex of gold and a ligand of Formula (III) 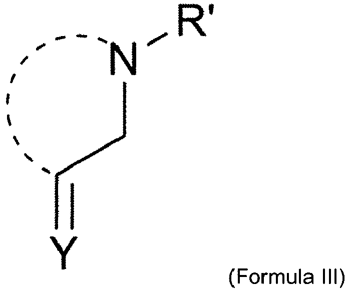 wherein:
R' is H or a C1-C4 hydrocarbyl group;
Y is O, S or NR" where R" is H or a C1-C4 hydrocarbyl group;
the dashed line together with the nitrogen and carbon atoms to which it is attached together form a substituted or unsubstituted ring moiety formed by m atoms where m is 4 to 8.

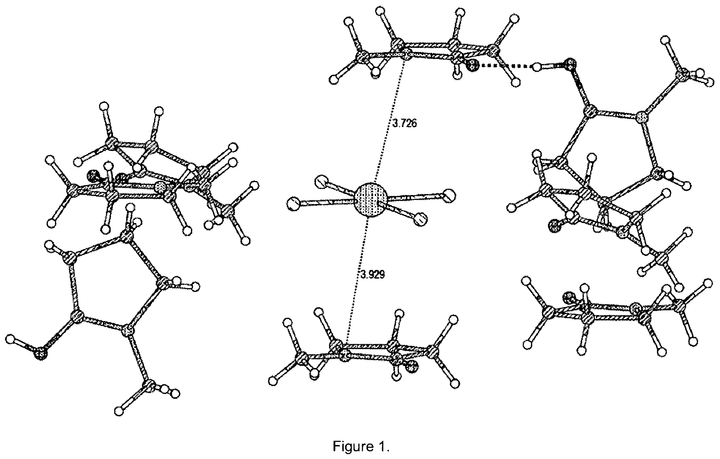

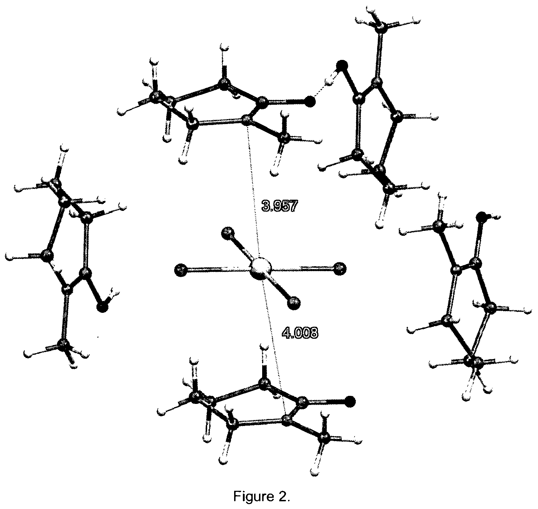

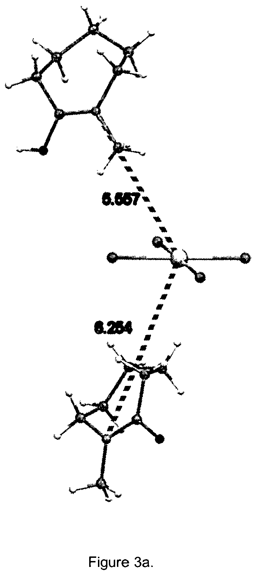

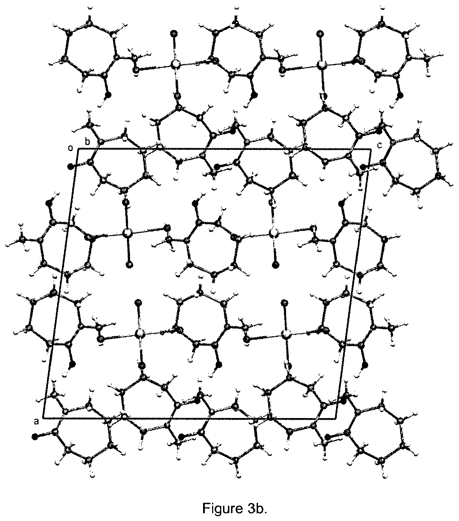

As will be clear from the Figures, some ligands such as N-methyl-pyrrolidone and N-methyl-piperidone form solids in which there is clear coordination between the nitrogen ring atom and the gold centre (see Figures 1 and 2); this coordination is thought to stabilise the complex. Other ligands such as N-methyl-caprolactam (see Figure 3) form solids in which there is a very long gold to nitrogen distance where there is no appreciable coordination. It is surprising that such solids form given the lack of interaction between the gold and nitrogen atom. Without wishing to be bound by any theory, it is thought that interactions between neighbouring ligands, e.g. through hydrogen bonding, form a framework which is analogous to a zeolite or metal organic framework in which the gold centre is stabilised. The term "complex" as used herein should be understood accordingly, and is not intended to require coordination between the gold centre and a heteroatom within the ligand.

Complexes of gold and ligands of Formula (I) are known from PCT/GB2022/053185 to be catalytically active as hydrochlorination catalysts, especially in the hydrochlorination of acetylene to produce VCM, and complexes according to the first and second aspects are similarly expected to be catalytically active in this reaction.

Complexes described according to the first and second aspects of the invention may be catalytically active "as is", but are typically supported on a support before being used as catalysts.

The number of m atoms within the ring moiety, Y and any substituents can be used to tune the reactivity of the gold centre by a mixture of steric and electronic interactions. Figures 1-3 show the crystal structures of the complexes [AuCl₄][H·N-methyl-pyrrolidone]₂ (Figure 1), [AuCl₄][H·N-methyl-piperidone]₂ (Figure 2) and [AuCl₄][H·N-methyl-caprolactam]₂ (Figure 3). The nitrogen to gold bond distance steadily increases as m is increased. This is thought to be due to the increased steric bulk of the ring as m increases.

Due to the more distant location of the =Y unit, complexes of Formula (III) have a greater electron density on the nitrogen atom as compared to complexes of Formula (II) for a given R'. Complexes of Formula (III) are therefore expected to have a stronger N-Au coordination and be more stable and less reactive.

Complexes according to the first or second aspects of the invention can be readily prepared by dissolving a gold compound (preferably HAuCl₄) and a ligand of Formula (II) or (III) in a solvent and isolating the resulting solid. The complexes tend to form in a 1 : 2 stoichiometry of Au : ligand. It is therefore preferred that the complexes are prepared by dissolving a gold compound and 2 equivalents of a ligand of Formula (II) or (III) in a solvent and isolating the resulting solid. The solid can be isolated simply by allowing the solvent to evaporate at ambient temperature or elevated temperature. If more than 2 equivalents are used then it may be necessary to remove excess ligand, e.g. by trituration or washing.

In a third aspect the invention relates to a process for the catalytic hydrochlorination of a substrate containing an alkyne unit, wherein the reaction is carried out in the presence of a complex or a supported complex according to the first or second aspects.

In a fourth aspect the invention relates to a method for preparing a supported complex , comprising the steps of:
(i) preparing an impregnation solution by dissolving or dispersing a gold compound and a ligand of Formula (II) or (III) in a solvent, or by dissolving a complex according to the first or second aspect of the invention in a solvent;
(ii) carrying out impregnation of a support using the impregnation solution from step (i) to produce an impregnated support; and
(iii) drying the impregnated support.

### Description of the Figures

Figure 1 shows the crystal structure of the complex [AuCl₄][H·N-methyl-pyrrolidone]₂.
Figure 2 shows the crystal structure of the complex [AuCl₄][H·N-methyl-piperidone]₂.
Figure 3 shows the crystal structure of the complex [HAuCl₄][N-methyl-caprolactam]₂.

### Detailed description of the invention

In the following, references to the "ring moiety" refer to the ring formed by the dashed line together with the -N(R')C(=Y)- unit (in the case of Formula (II)) or the dashed line together with the - N(R')CH₂C(=Y)- unit (in the case of Formula (III)). This ring moiety contains m atoms, one of those atoms being the N atom of the N(R') unit. For the avoidance of doubt, as an example, where the ligand is caprolactam the ring moiety contains 7 atoms (m = 7).

In the following, preferred features apply to ligands of Formula (II) and (III) unless stated otherwise.

The value of m is 4, 5, 6, 7 or 8. It is preferred that the value of m is 5, 6 or 7.

R' is H or a C1-C4 hydrocarbyl group i.e. methyl, ethyl, n-propyl, i-propyl, n-butyl, 1-methyl-propyl, 2-methyl-propyl or t-butyl. R' is preferably H, methyl or ethyl, preferably H or methyl.

Y is O, S or NR" where R" is H or a C1-C4 hydrocarbyl group. R" is preferably H or methyl.

Hydrogen bonding between one ligand moiety and another may be possible when Y is O. Without wishing to be bound by any theory, it is thought that hydrogen bonding between ligands may help to stabilise the gold centre. It is therefore preferred that Y is O.

In preferred embodiments the ring moiety contains a single heteroatom (i.e. the nitrogen of the NR' unit shown in Formula (II) and (III)) with the remainder being carbon atoms.

The ring moiety may be saturated or unsaturated, preferably unsaturated.

The ring moiety may be substituted or unsubstituted. Substitution of the ring moiety may be used to tune the activity of the gold centre by a mixture of steric interactions and by modifying the electron density on the nitrogen of the NR' unit. Preferred substituents are selected from the group consisting of: a halogen, a carbonyl group, a R‴ group, a NH₂ group, a NHR‴ group or a NR‴₂ group, where in each case R‴ is independently selected from a C1-C4 hydrocarbyl group. R‴ is preferably H or methyl. For the avoidance of doubt, the units R' and =Y are not "substituents" in this context.

Due to the greater steric bulk of substituted rings it is expected that substituted rings will have a longer Au-N bond distance and therefore a weaker interaction. If the ring moiety is substituted then it is preferably substituted at a single position only. In a preferred embodiment the ring moiety is unsubstituted.

The ring moiety contains at least one nitrogen heteroatom, i.e. the nitrogen atom provided by the NR' unit shown in Formula (II) and (III)). The ring moiety may optionally include one or more further heteroatoms selected from O, S or NR"" where R"" is H or a C1-C4 hydrocarbyl group. If a further heteroatom is present then it is preferred that only one further heteroatom is present. It is particularly preferred that the only heteroatom within the ring is the nitrogen atom provided by the NR' unit.

Preferred ligands of Formula (II) when m is 4 are 2-azetidinone and N-methyl-2-azetidinone.

Preferred ligands of formula (II) when m is 5 are N-ethyl-pyrrolidone, maleimide, N-methyl-maleimide, succinimide and N-methyl-succinimide.

Preferred ligands of formula (III) when m is 5 are 3-pyrrolidone and N-methyl-3-pyrrolidone.

Preferred ligands of formula (III) when m is 6 are 3-piperidone, N-methyl-3-piperidone, 4-piperidone and N-methyl-4-piperidone.

Preferred ligands of Formula (II) when m is 7 are caprolactam and N-methyl-caprolactam.

Preferred embodiments of the supported complex will now be set out. The supported complex may also be referred to herein as the catalyst. Unless stated otherwise, preferred embodiments apply irrespective of whether the ligand is of Formula (II) or (III). Herein all % relate to percentages by weight of the total catalyst, unless otherwise stated.

The loading of Au is a trade-off between the cost of Au and the activity of the catalyst. A typical Au content for the catalyst is 0.01 to 5 wt% based on the weight of catalyst as a whole. Typically the loading of Au will be from 0.01 to 2 wt%, such as from 0.05 to 1.5 wt%.

In some embodiments, in addition to Au the catalyst may include one or more promoter metals. The presence of a promoter metal may improve the activity of the catalyst and/or help to maintain the activity of the catalyst over time. Suitable promoters include Group 1 and Group 2 metals, as well as cobalt, copper, lanthanum and cerium.

Any known catalyst support may be used. Typical metal oxide supports such as alumina, silica, zeolite, silica-alumina, titania or zirconia and composites thereof may be used. However, it is preferred that the support is a carbon support. The carbon may be derived from natural sources (e.g. peat, wood, coal, graphitic) or may be a synthetic carbon. The carbon is preferably an activated carbon, activated for example by steam, acid, or otherwise chemically activated.

The support may be in the form of a powder, granules or shaped particles. Examples of shaped particles include spheres, tablets, cylinders, multi-lobed cylinders (e.g. trilobes), rings, miniliths etc. or a massive catalyst unit such as a monolith. Alternatively, the catalyst in the form of a powder may be included in a coating formulation and coated onto a reactor wall or shaped substrate such as a monolith. One preferred form of catalyst support comprises a plurality of shaped units in the form of cylinders, spheres or lobed cylinders each having a diameter of 0.1 - 10 mm, or, more preferably a diameter in the range 1 - 3mm. In the case of a cross-section shape having a non-uniform diameter, such as a lobed cylinder, the diameter is an average diameter. Cylinders and trilobes are particularly preferred shapes of support.

### Hydrochlorination process

In a third aspect the invention relates to a process for the catalytic hydrochlorination of a substrate containing an alkyne unit, wherein the reaction is carried out in the presence of a complex according to the first or second aspects.

The conversion of acetylene to VCM is typically carried out at elevated temperature, usually between about 100°C and 250°C. The reaction temperature is a balance between conversion and economics of running the reactor at higher temperatures. Furthermore, at temperatures significantly above 200 °C coking can become significant.

The HCl and acetylene are preferably premixed, and also preferably pre-heated to the reaction temperature. Normally HCl is present in excess of the amount required for the stoichiometric reaction. The catalyst may be present in the reactor in the form of a fixed bed of catalyst particles arranged such that the feed gases are passed over or through the catalyst bed. Alternative reactor arrangements may be used, including fluidised beds or other moving bed arrangements. The catalyst may alternatively be provided in the form of a monolith or coated on the wall of a reactor vessel. The catalyst bed may be provided with means to regulate the temperature to avoid overheating due to the exothermic reaction, or to raise the temperature, if required. It may be preferred to treat the catalyst with HCl before use in the process. This treatment is typically carried out by flowing HCl over the catalyst for a period of at least an hour at a temperature of at least 50°C, more especially > 100°C. This pre-treatment may take place in the reactor by operating with a flow of HCl without the acetylene, at a suitable temperature.

The process is particularly suitable when acetylene is used as the substrate, to produce VCM. The conversion of acetylene to VCM is preferably carried out in the gas phase.

### Catalyst manufacture

In a fourth aspect the invention relates to a method for preparing a supported complex, comprising the steps of:
(i) preparing an impregnation solution by dissolving or dispersing a gold compound and a ligand of Formula (II) or (III) in a solvent, or by dissolving a complex according to the first or second aspect in a solvent;
(ii) carrying out impregnation of a support using the impregnation solution from step (i) to produce an impregnated support; and
(iii) drying the impregnated support.

The supported complex can either be prepared in situ by dissolving the gold compound and ligand in a solvent, or may be pre-formed and then dissolved in a solvent.

The molar equivalents of ligand of Formula (II) or (III) added relative to gold is preferably from 1 : 1 to 1 : 4. Including more than 4 equivalents of ligand does not appear to have a detriment to the catalyst performance but is unfavoured on cost grounds. Because the gold and ligand form complexes of a 1 : 2 stoichiometry it is preferred that 2 equivalents of ligand are used.

A preferred gold compound is for use in step (i) is HAuCl₄. The resulting complexes generally contain a [AuCl₄] unit.

The solvent may be an organic solvent or water. Preferred organic solvents include acetone and 1-propanol. Water is particularly preferred.

In step (ii) the support is impregnated with the impregnation solution formed in step (i). Impregnation techniques will be well known to those skilled in the art.

In step (iii) the catalyst is dried to remove the solvent. Drying techniques will be well known to those skilled in the art. Depending on the choice of solvent drying may be carried out at ambient temperature, or at elevated temperature. A stream of gas may be used to help remove the solvent. It will be appreciated that the temperature and duration of drying will differ depending on the scale at which the preparation is carried out.

### Examples

### Preparation of (HAuCl₄)(N-methyl-pyrrolidinone)₂ - not according to the invention

Acetone (15 ml) was added to 2.50g of a solution of HAuCl₄ (40.02% Au) containing 1.00g Au. To this solution was added a solution containing 4 molar equivalents of N-methyl pyrrolidine (2.01 g) in 15 ml acetone. The resultant solution was mixed and allowed to react for 30 min. Thereafter the solution was evaporated under vacuo to give an oily residue. After washing with aliquots of cyclohexane a solid product was obtained and recrystallised from 1-propanol - cyclohexane to yield a crop of fine bright yellow needles in high yield. Needle shaped single crystals suitable for X-Ray crystal structure analysis were obtained by slow crystallisation from 1-propanol - cyclohexane.

Single crystal structure determination by X-Ray diffraction analysis at 296 K using radiation with a wavelength of 0.71073 Å showed that the material had the following properties: monoclinic, space group P2₁/n, a = 14.2719(8) Å, b = 7.6086(5) Å, c = 16.5447(15) Å, α = 90 °, β = 98.485(7) °, γ = 90 °, Z = 4, crystal dimensions 0.380 x 0.140 x 0.090 mm³. A total of 4383 independent reflections were collected.

An image of the structure, showing NMP coordination around the AuCl₄ centre, is shown in Figure 1. The N-Au distances were 3.726 Å and 3.929 Å.

The complex was also prepared using an aqueous procedure. Demineralised water (5 ml) was added to 2.50 g of a solution of HAuCl₄ (40.02% Au) containing 1.00g Au. To this solution 2 molar equivalents of N-methyl-pyrrolidone (1.15 g) was added dropwise. As each drop was added an immediate reaction was observed and a solid yellow material separated out from the aqueous layer. Thereafter the aqueous layer was removed (decanted off) and the yellow solid was placed in vacuo. This solid was readily soluble in 1-propanol and was recrystallised from 1-propanol - cyclohexane to yield a crop of fine yellow needles.

### Preparation of (HAuCl₄)(N-methyl-piperidone)₂ - not according to the invention

Acetone (15 ml) was added to 2.50g of a solution of HAuCl₄ (40.02% Au) containing 1.00g Au. To this solution was added a solution containing 4 molar equivalents of N-methyl-2 piperidone (2.294 g). The resultant solution was mixed and allowed to react for 30 min. Thereafter the solution was evaporated under vacuo to give a dark yellow oily residue. After washing and trituration with 3 aliquots of cyclohexane a bright yellow solid product was obtained and recrystallised from 1-propanol - cyclohexane to yield a crop of fine bright yellow needles in high yield. Needle shaped single crystals suitable for X-Ray crystal structure analysis were obtained by slow crystallisation from a mixture of acetone, 1-propanol and cyclohexane.

Single crystal structure determination by X-Ray diffraction analysis at 296 K using radiation with a wavelength of 0.71073 Å showed that the material had the following properties: monoclinic, space group P21/c, a = 11.7410(5) Å, b = 7.9507(3) Å, c = 20.9587(9) Å, α = 90 °, β = 98.519(4) °, γ = 90 °, Z = 4, crystal dimensions 0.290 x 0.140 x 0.120 mm³. A total of 4874 independent reflections were collected.

An image of the structure, showing N-methyl-piperidone coordination around the AuCl₄ centre, is shown in Figure 2. The N-Au distances were 3.957 Å and 4.008 Å.

### Preparation of (HAuCl₄)(N-methyl-caprolactam)₂

Acetone (15 ml) was added to 2.50g of a solution of HAuCl₄ (40.02% Au) containing 1.00g Au. To this solution was added a solution containing 4 molar equivalents of N-methyl-caprolactam (2.578 g). The resultant solution was mixed and allowed to react for 30 min. Thereafter the solution was evaporated under vacuo to give a dark yellow oily residue. This was washed and triturated with aliquots of cyclohexane to remove excess N-methyl-caprolactam. The product was recrystallised from 1-propanol - cyclohexane to yield a crop of fine deep yellow needles in high yield suitable for X ray crystal structure analysis. Elemental analysis calculated for AuC₁₄Cl₄H₂₇N₂O₂ requires Cl, 23.87%; C, 28.30%; H, 4.58%; N, 4.72%; found Cl, 23.85%; C, 28.89%; H, 4.57%; N, 4.64%.

Single crystal structure determination by X-Ray diffraction analysis at 296 K using radiation with a wavelength of 1.54184 Å showed that the material had the following properties: monoclinic, space group P21/c, a = 15.50090(10) Å, b = 8.25590(10) Å, c = 16.6629(2) Å, a = 90 °, β = 97.4010(10) °, γ = 90 °, Z = 4, crystal dimensions 0.400 x 0.160 x 0.070 mm³. A total of 36041 independent reflections were collected.

An image of the structure, showing N-methyl-caprolactam coordination around the AuCl₄ centre, is shown in Figure 3a. The N-Au distances were 5.557 Å and 6.254 Å which indicated no appreciable interaction. Figure 3b shows the structure down the b axis, with the unit cell highlighted. It is possible that the structure is stabilised by hydrogen bonding between adjacent N-methyl-caprolactam ligands.

An analogous procedure using water as the solvent also gave crystals suitable for X ray crystal structure analysis. Elemental analysis calculated for AuC₁₄Cl₄H₂₇N₂O₂ requires Cl, 23.87%; C, 28.30%; H, 4.58%; N, 4.72%; found Cl, 23.90%; C, 28.22%; H, 4.55%; N, 4.63%. The structure was the same as that obtained when using acetone as solvent.

## Claims

1. A complex comprising gold and a ligand of Formula (II) 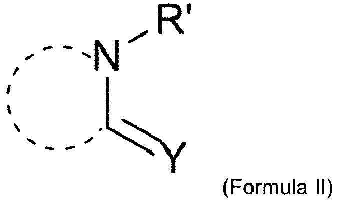 wherein:
R' is H or a C1-C4 hydrocarbyl group;
Y is O, S or NR" where R" is H or a C1-C4 hydrocarbyl group;
the dashed line together with the nitrogen and carbon atoms to which it is attached together form a substituted or unsubstituted ring moiety formed by m atoms where m is 4 to 8;
on the proviso that ligands of Formula (I) are excluded: 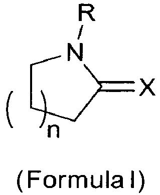 wherein
X is O or S;
n is 1 or 2; and
R is H or a C1-C4 hydrocarbyl group.

2. A complex comprising gold and a ligand of Formula (III) 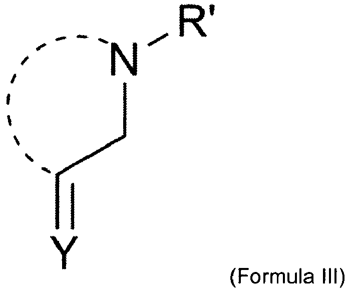 wherein:
R' is H or a C1-C4 hydrocarbyl group;
Y is O, S or NR" where R" is H or a C1-C4 hydrocarbyl group;
the dashed line together with the nitrogen and carbon atoms to which it is attached together form a substituted or unsubstituted ring moiety formed by m atoms where m is 4 to 8.

3. A complex according to claim 1 or claim 2, wherein m is 5, 6 or 7.

4. A complex according to any of claims 1 to 4, wherein Y is O.

5. A complex according to any of claims 1 to 4, wherein R' is H or methyl.

6. A complex according to any of claims 1 to 5, wherein the ring moiety is substituted with one or more groups selected from the group consisting of:
a halogen;
a carbonyl group;
a R‴ group;
a NH₂ group;
a NHR‴ group; or
a NR‴₂ group;
where in each case R‴ is independently selected from a C1-C4 hydrocarbyl group.

7. A complex according to any of claims 1 to 6, wherein the ring moiety is substituted with a single group.

8. A complex according to any of claims 1 to 5, wherein the ring moiety is unsubstituted.

9. A complex according to claim 1, wherein the ligand is caprolactam or N-methyl-caprolactam.

10. A complex according to any of claims 1 to 9, wherein the complex contains a [AuCl₄] unit.

11. A supported complex comprising a complex according to any of claims 1 to 10 on a support.

12. A process for the catalytic hydrochlorination of a substrate containing an alkyne unit, wherein the reaction is carried out in the presence of a complex or supported complex according to any of claims 1 to 11.

13. A process as claimed in claim 12, wherein the substrate is acetylene.

14. A method for preparing a supported complex according to claim 11, comprising the steps of:
(i) preparing an impregnation solution by dissolving or dispersing a gold compound and a ligand of Formula (II) or (III) in a solvent; or by dissolving a complex according to any of claims 1 to 10 in a solvent;
(ii) carrying out impregnation of a support using the impregnation solution from step (i) to produce an impregnated support; and
(iii) drying the impregnated support.

15. A method according to claim 14, wherein the solvent is water.
